# EUROPÄISCHE PATENTSCHRIFT

(11) **EP 1 496 221 B1**
(45) Veröffentlichungstag und Bekanntmachung des Hinweises auf die Patenterteilung: **18.05.2011**
(21) Anmeldenummer: 04015866.9
(22) Anmeldetag: 06.07.2004
(51) Int. Cl.: F02D 9/02

(54) **Vorrichtung zur Zuführung eines Gasgemisches zu Saugstutzen von Zylindern eines Verbrennungsmotors**
Apparatus for supplying a gas mixture to the intake runners of an internal combustion engine
Dispositif permettant l'alimentation en melange gazeux dans la conduite d'admission d'un moteur à combustion interne

(30) Priorität: 07.07.2003 DE 10330743
(43) Veröffentlichungstag der Anmeldung: 12.01.2005
(60) Teilanmeldung: 10186040.1
(73) Patentinhaber: Behr GmbH & Co. KG, 70469 Stuttgart (DE)
(72) Erfinder: Burk, Roland, Dipl.-Phys., 70469 Stuttgart (DE); Geskes, Peter, Dr., 70469 Stuttgart (DE)

(56) Entgegenhaltungen:
- EP-A- 0 843 084
- WO-A-2004/044406
- DE-A1- 19 918 591
- FR-A- 2 805 568
- US-A1- 2002 139 360
- US-A1- 2003 114 978

## Beschreibung

Die Erfindung betrifft eine Vorrichtung zur Zuführung eines Gasgemisches zu Saugstutzen von Zylindern eines Verbrennungsmotors. Bei einem Anwendungsfall wird als Gasgemisch angesaugte Luft verwendet, insbesondere dient dabei die Vorrichtung der Konditionierung der angesaugten und einem Verbrennungsmotor zugeführten Luft (auch Ansaugluft oder angesaugte Luft genannt). Diese Vorrichtung wird im Folgenden auch als Ansaugmodul bezeichnet.

Üblicherweise weist das Ansaugmodul ansaugseitig beispielsweise auf einer ersten Seite Einrichtungen, mit denen der Zustand des angesaugten Gasgemisches" z.B. deren Zusammensetzung, Temperatur, Druck, Massenstrom und/oder Verteilung gemessen und/oder verändert werden kann, und ausgangsseitig auf einer zweiten, dem Motor zugewandten Seite mindestens einen Ansaugluftführungskanal auf. Im Ansaugmodul kann bekanntermaßen auch ein als Ladeluftkühler ausgebildeter Wärmetauscher angeordnet sein.

Aus der älteren, für den gleichen Anmelder der vorliegenden Anmeldung eingereichten DE 102 54 016.0 ist bekannt, dass beispielsweise die Integration einer zweiten Stufe des Ladeluftkühlers in das Ansaugmodul vorteilhaft ist, da sie möglichst motornah zur Vermeidung von thermischen Verlusten angeordnet ist. Hierbei kann es jedoch zu ungleichmäßigen Temperaturverteilungen (Temperatursträhnigkeit) und zu inhomogenen Temperaturen der angesaugten Luft in den einzelnen Zylindern des Motors kommen, welche wiederum zu negativen Auswirkungen auf das Emissionsverhalten, insbesondere in Bezug auf NOₓ-Emissionen führen.

Vorrichtungen zur Zuführung eines Gasgemisches zu Saugstutzen von Zylindern eines Verbrennungsmotors sind auch aus EP 0 878 619 A2 und US 6 053 154 A1 bekannt.

Der Erfindung liegt daher die Aufgabe zugrunde, die bekannte Vorrichtung im Hinblick auf eine möglichst weitgehende Vermeidung der o.g. Nachteile zu verbessern.

Diese Aufgabe wird erfindungsgemäß mit den Merkmalen des Anspruchs 1 gelöst. Vorteilhafte Weiterbildungen der Erfindung sind Gegenstand der abhängigen Ansprüche.

Die Erfindung geht dabei von der Überlegung aus, dass in das Ansaugmodul nicht nur ein Wärmetauscher integriert sein sollte, sondern mehrere Komponenten, die zu einer Versorgung des Verbrennungsmotors mit dem anzusaugenden Gasgemisch erforderlich sind. Hierzu zählen insbesondere Sensoren, Aktuatoren und Komponenten zur Beeinflussung von physikalischen Größen und/oder der Zusammensetzung des angesaugten Gasgemisches, auch hinsichtlich dessen räumlicher oder zeitlicher Verteilung. Solch eine Integration mehrerer Einzelkomponenten in ein Ansaugmodul, hat den Vorteil, dass der Bauraum durch Mehrfachnutzung von einzelnen Komponenten und Ausnutzung funktionaler und konstruktiver Synergien deutlich reduziert wird. Zudem wird durch die Zusammenfassung mehrerer funktionaler Komponenten in ein Modul oder in eine Baugruppe, beispielsweise in ein Ansaugmodul, die Zahl der mechanischen Schnittstellen zu benachbarten Funktionsgruppen minimiert, was die Integration, die Montage und die Logistik vereinfacht. Darüber hinaus kann der Zustand eines angesaugten Gasgemisches praktisch ohne thermische Verluste optimal und nahezu verzögerungsfrei den variablen Bedürfnissen eines idealen Motormanagement angepasst werden. In den nachfolgenden Abschnitten werden die unterschiedlichen Einzelkomponenten genauer beschrieben, die in das Ansaugmodul integrierbar sind.

In einer ersten Ausführungsform ist eine bekannte motornahe letzte Ladeluft-Kühlstufe vorgesehen, um mit der motornahen Kühlung die thermischen Verluste zu minimieren. Eine motornahe Kühlung kann jedoch den nachteiligen Effekt einer Temperatursträhnigkeit nach sich ziehen. Dies insbesondere dann, wenn zur Regelung einer vom Motormanagement angeforderten Lufttemperatur ein in seiner Größe variabler ungekühlter Bypass-Luftstrom mittels eines Steuermittels zugemischt werden soll. Die Temperatursträhnigkeit wird gemäß der Erfindung durch ein Mittel zur Homogenisierung der Temperaturverteilung aufgehoben, das abströmseitig des Ladeluftkühlers und der Einmündung des Bypass-Luftmassenstroms angeordnet ist. Dabei kann es sich bevorzugt um eine Einrichtung oder ein Mittel zur Durchmischung des angesaugten Gasgemisches zum Beispiel in der Form eines Statikmischers handeln. Durch die Integration einer Einrichtung zum Durchmischen des angesaugten Gasgemisches, z.B. von angesaugter Luft wird das Ansaugmodul mit integrierter motornaher Kühlung auch im Hinblick auf das Verschleiß- und Emissionsverhalten des Motors verbessert.

In einer alternativen Ausführungsform kann auch vorgesehen sein, dass die Funktionalität des Statikmischers zur Auflösung der Temperatursträhnigkeit durch im Motor oder im Ansaugmodul ohnehin benötigte Komponenten erfüllt wird. Beim Ottomotor kommen dafür die Luftdrosseleinrichtung und/oder die Luftmengenmesseinrichtung zur Gemischregelung in Betracht. Beispielsweise ist die Luftdrosseleinrichtung oder die Luftmengenmesseinrichtung hierzu in Form eines in Strömungsrichtung gesehen aufgehenden Trichters ausgeführt, wodurch eine Durchmischung der angesaugten Luft erzielt wird. Alternativ kann die Drosselklappe in Analogie zu einer Jalousie auch eine Mehrzahl einzelner Klappen aufweisen, die eine Formgebung aufweisen, durch die der Gasstrom verwirbelt und damit durchmischt wird. Aber auch entsprechend gestaltete luftseitige Rippen eines im Ansaugmodul angeordneten Wärmetauschers selbst können zu einer Durchmischung der Luft führen. Hierzu werden beispielsweise die Rippen des Wärmetauschers abschnittsweise mit einem Anstellwinkel gegenüber der durchströmenden Luft versehen, damit der Strömungsvektor des angesaugten Gasgemisches, z.B. von Luft wechselnde Komponenten senkrecht zur Hauptströmungsrichtung der Luft bekommt. Die dadurch induzierte Verwirbelung der Luft kann die Strähnigkeit der Luft auflösen oder wenigstens minimieren.

In einer weiteren beispielhaften Ausführungsform wird vorgeschlagen, alternativ oder zusätzlich zu einem Wärmeübertrager zur bedarfsgerechten Kühlung der Ladeluft einen Abgaskühler mit einem optionalen Mittel zur Regelung eines rückgeführten Abgasmassenstroms in das Modul zu integrieren. Das weitere Steuermittel ist zweckmäßigerweise als Regelklappe ausgeführt und kann in seiner Ausführung so gestaltet und angeordnet sein, dass sich eine homogene Durchmischung des Abgases mit der Ansaugluft ergibt. In diesem Fall können aber auch abströmseitig liegende Komponenten wie z. B. vorgenannter Ladeluftkühler zusätzlich eine Homogenisierung der Konzentrations- Temperatur- und Druckverteilung des zugemischten Abgases bewirken.

Grundsätzlich kann die Regelklappe des Abgaskühlers auch als so genannte Bypassklappe ausgeführt werden oder durch eine zusätzliche Bypassklappe ergänzt werden. In diesem Fall wird der zurückgeführte Abgasmassenstrom nicht vorwiegend hinsichtlich Menge sondem alternativ oder zusätzlich hinsichtlich Temperatur geregelt, indem ein Teilmassenstrom am Abgaskühler vorbeigeführt wird.

Zusätzlich oder alternativ kommt eine geometrische Gestaltung eines Luftabgriffs einzelner Ansaugluftführungskanäle zu den jeweiligen Zylindern in Betracht, derart, dass an den Saugventilen eine weitgehend homogene Druck-, Temperatur- und Konzentrationsverteilung erreicht wird. Mit anderen Worten: Die Einrichtung zur Durchmischung des Gasgemisches, z.B. der angesaugten Luft, insbesondere der Statikmischer wird durch entsprechend ausgeführte Abmessungen, Anordnungen und Formen von vorhandenen Komponenten gebildet, welche dann einen Mehrfachnutzen besitzen und auch funktionsvariabel sein können mit einer beliebigen Kombination aus Mischen und Messen oder Mischen und Drosseln oder Mischen und Filtern oder Mischen und Kühlen oder Zudosieren und Mischen. In einer solchen Ausführungsform kann auf einen separaten Statikmischer verzichtet werden. In einer vorteilhaften Ausgestaltung dient die Einrichtung zur Durchmischung des Gasgemisches als Schalldämpfer.

Je nach Art und Ausbildung des Ansaugmoduls kann aber auch ein Mittel zur zusätzlichen Durchmischung des rückgeführten Abgases z. B. in Form eines einzigen Statikmischers oder eines Systems aus mehreren Düsen bzw. Austrittsöffnungen vorgesehen sein. Hierdurch wird eine zusätzliche Komponente vermieden. Mit anderen Worten: Durch einen sowohl das Mittel zur Durchmischung der angesaugten Luft mit unterschiedlicher Temperaturverteilung als auch das Mittel zur Durchmischung des rückgeführten Abgases mit der Ansaugluft bildenden Statikmischer wird sowohl die angesaugte Luft als auch das zurückgeführte Abgas oder beide miteinander durchmischt. Es ist insgesamt nur ein funktionales und strukturelles Element zur Durchmischung der Ansaugluft (= Frischluft) und des Abgases erforderlich.

Erfindungsgemäß weist die Vorrichtung, insbesondere das Ansaugmodul, einen Einlass für eine Abgasrückführung auf, der in Richtung der einströmenden angesaugten Luft gesehen vor dem Mischer, insbesondere vor dem Statikmischer in das Ansaugmodul mündet. Eine solche Abgasrückführung wird zur Regelung der Verbrennungstemperatur des Brenngasgemisches von Motoren verwendet, um Abgas-Behandlungssysteme in einem optimalen Temperaturfenster betreiben zu können, bzw. die NOx-Bildung durch zu hohe Verbrennungstemperaturen zu begrenzen.

Erfindungsgemäß weist die Abgasrückführung mindestens einen Abgaskühler zur Kühlung des rückgeführten Abgases auf. Erfindungsgemäß ist die Abgaskühlung mehrstufig ausgebildet, insbesondere zweistufig mit einem ersten und einem zweiten jeweils als Abgaskühler ausgebildeten Wärmetauscher, so dass das zurückgeführte Abgas mit einer Temperatur in das Ansaugmodul gelangt, die noch für die bevorzugt eingesetzten Kunststoffwerkstoffe verträglich sind und nach weiterer Abkühlung für besonders günstige Verhältnisse beim Verbrennungsprozess im Motor sorgt. Erfindungsgemäß ist dabei der zweite auf geringerem Temperaturniveau arbeitende Abgaskühler im Ansaugmodul selbst angeordnet, während der erste Abgaskühler in einem Zuführkanal der Abgasrückführung oder noch im Abgasstrang selbst angeordnet ist. Dies ermöglicht eine Kühlung von angesaugter Luft und angesaugtem Abgas zusammen innerhalb des Ansaugmoduls.

Vorteilhaft ist bei dem Ansaugmodul mit Ladeluftkühler eine Bypassklappe vorgesehen, die in Richtung der einströmenden angesaugten Luft vor oder nach dem Ladeluftkühler angeordnet und in einer ersten Endstellung zur Führung im wesentlichen der gesamten angesaugten Luft über den Ladeluftkühler und in einer zweiten Endstellung zur Führung der angesaugten Luft im Bypass völlig am Ladeluftkühler vorbei vorgesehen ist. Eine einfache und schnelle Steuerung von Zwischenstellungen ermöglicht eine bedarfsgerechte und schnell variable Kühlung der angesaugten Luft, z.B. eine geringe Kühlung, indem z.B. im Winter bei teilweise oder ganz geöffneter Bypassklappe nur ein Teil des angesaugten Gasgemisches gekühlt wird bzw. das angesaugte Gasgemisch vollständig am Kühler vorbeigeführt wird, oder z.B. eine stärkere Kühlung durch Kühlung der gesamten angesaugten Luft bei geschlossener Bypassklappe, z. B. in dem Fall, dass im Sommer und/oder temporär eine höhere Motorleistung beispielsweise für einen Überholvorgang verlangt wird.

Weiter vorteilhaft ist ansaugseitig im Ansaugmodul eine Drosselklappe zur Einstellung des Strömungsvolumens des Gasgemisches vorgesehen. Darüber hinaus ist vorzugsweise nach der Drosselklappe ein Massenstrom- oder Volumenstrommesser und/oder ein Temperaturfühler angeordnet. Massenstrommesser und/oder Temperaturfühler liefern wichtige Messwerte, die beispielsweise von einer Fahrzeugelektronik (= elektronisches Motormanagement) ausgewertet werden und den Betrieb des Motors innerhalb vorgegebener oder vorgebbarer Sollwerte oder einem vorgegebenen oder vorgebbaren Spektrum solcher Sollwerte (auch Betriebszustandsfenster genannt) ermöglichen.

Zusätzlich kann die Vorrichtung, insbesondere das Ansaugmodul zur Einhaltung eines Abgastemperaturfensters einen weiteren Wärmetauscher und/oder insbesondere elektrischen Heizer, zur temporären Beheizung der angesaugten Luft mittels heißen Kühlmittels aus dem Kühlkreislauf umfassen, was zum Beispiel im Winterbetrieb wünschenswert sein kann.

Bevorzugt ist das Ansaugmodul oder ein Gehäuse desselben aus einem temperatur- und druckbeständigen spritzgussfähigen Kunststoff derart ausgeführt, dass alle funktionalen Komponenten druckverlust- und bauraumoptimiert anordenbar sind, und sich ein Höchstmaß an Homogenität der Druckund Temperaturverteilung sowie ggf. der Luftzusammensetzung aus Frischluft (angesaugter Luft) und rückgeführtem Abgas unter allen Betriebsbedingungen ergibt.

Als Variante kann weiter vorgesehen sein, dass anstelle des Ladeluftkühlers ein Wärmeübertrager zur wahlweisen Kühlung oder Beheizung der angesaugten Luft zum Einsatz kommt. Der Wärmeübertrager ist über Ventile oder dergleichen mit heißem Kühlmittel, z.B. aus dem Kühlkreislauf des Motors, oder durch eine Kühlvorrichtung gekühltes Kühlmittel beaufschlagbar.

Je nach Motortyp (Ottomotor / Dieselmotor) können selbstverständlich auch nur einzelne Merkmale oder funktionale Elemente im Ansaugmodul integriert sein. Gemeinsames Merkmal aller Ausführungsvarianten ist jedoch, dass das Gehäuse, also das Gehäuse des Ansaugmoduls, Ausnehmungen zur luft- und spritzwasserdichten Aufnahme der funktionalen Komponenten aufweist. Diese Komponenten sind in ihrer funktionalen Ausführung, Anordnung und geometrischen Gestaltung oder Dimensionierung derart realisiert, dass sich bei minimalem Raumbedarf ein Maximum an Synergie ergibt. Dies führt zu einem gleichzeitig kompakten und funktional ausgereiften Ansaugmodul mit einer auf ein Minimum reduzierten Anzahl von Schnittstellen. Dadurch werden die Einsatzmöglichkeiten des Ansaugmoduls erhöht, weil es auch in Einbausituationen verwendet werden kann, bei denen zuvor die Verwendung an den Platzverhältnissen gescheitert ist. Die geringe Anzahl der Schnittstellen kommt zudem der Optimierung des Einbaus und einer evtl. Wartung entgegen.

In anderen Ausführungsformen ist das Ansaugmodul vorteilhaft zwei- oder mehrteilig ausgeführt, um speziellen Anforderungen hinsichtlich Herstellbarkeit und Montage im Motorraum gerecht zu werden.

In einer weiteren Ausführungsform ist vorgesehen, dass das Steuermittel als eine Klappe, insbesondere Bypassklappe ausgeführt ist, welche in der Abgasrückführung im Bereich des Ansaugmoduls zum Zuführen von zurückgeführtem Abgas in mindestens zwei variablen Gasströmen angeordnet ist. Dabei wird mittels des Steuermittels ein erster Gasstrom einem Ladeluftstrom vor einer ersten Mischeinrichtung zugeführt, wobei die erste Mischeinrichtung zur Mischung des ersten Gasstroms mit Ladeluftstrom vor Zuführung eines daraus resultierenden ersten Mischgasstroms in einen Ladeluftkühler vorgesehen ist. Darüber hinaus wird mittels des Steuermittels ein zweiter Gasstrom in einem Bypass an der ersten Mischeinrichtung und dem Ladeluftkühler vorbeigeführt und einer zweiten Mischeinrichtung zur Mischung des zweiten Gasstroms mit dem ersten Mischgasstrom zugeführt, wobei ein daraus resultierender zweiter Mischgasstrom den Saugstutzen zuführbar ist.

Alternativ kann das Steuermittel ein weiteres Klappenelement aufweisen, welches den ersten Gasstrom zusammen mit Ladeluftstrom in einem weiteren Bypass an der ersten Mischeinrichtung und dem Ladeluftkühler vorbeiführt und der zweiten Mischeinrichtung zuführt, wobei die zweite Mischeinrichtung zur Mischung des ersten Gasstroms, des Ladeluftstroms und des zweiten Gasstroms vorgesehen ist, wobei ein daraus resultierender dritter Mischgasstrom den Saugstutzen zuführbar ist. Mit anderen Worten: Beide Gasströme werden über getrennte Bypass-Kanäle am Ladeluftkühler vorbeigeführt. Hierdurch kann dem Motor, z. B. in einer Kaltstartphase oder im Winter weitgehend ungekühltes Ansaug-Mischgas (= dritter Mischgasstrom), zugeführt werden, wodurch die Zündwilligkeit des Kraftstoff-/Abgas-/Luftgemisches erhöht und gegebenenfalls die Motoraufheizung und/oder das Anspringen eines Katalysators beschleunigt wird.

Die weiteren Ausführungsformen der Vorrichtung mit der Auftrennung des Abgasstroms in zwei getrennte Gasströme, von denen einer in einem herkömmlichen Abgaskühler vorgekühlt und anschließend zum Ansaugmodul und der andere direkt zum Ansaugmodul geführt wird, ist eine sehr flinke und kontinuierliche Regelung der Verbrennungstemperatur mittels variabler Kühlung des Ansaug-Gas-Gemisches (= zweiter Mischgasstrom) unter Berücksichtigung des Taupunktes des Abgas-/Luft-Gemisches (= erster Mischgasstrom) vor dem Ladeluftkühler ermöglicht. Ziel dieser Regelung mittels des Steuermittels, z. B. einer ersten Bypassklappe, ist die bedarfsgerechte Abkühlung des zweiten Mischgasstroms unter sicherer Vermeidung der sehr schädlichen, da korrosiv wirkenden Kondensation im Ladeluftkühler. Dies wird dadurch erzielt, dass immer nur soviel Abgas in den Ladeluftstrom eingebracht wird, dass der Taupunkt des Abgas-/Luftgemisches unter der Temperatur des Ladeluftkühlers, vorzugsweise unter der Temperatur des diesen durchströmenden Kühlmittels liegt. Die optimale Kombination aus erreichbarer Kühlung des ersten Mischgasstroms und zurückgeführten Abgasanteil (= zweiter Gasstrom, regelbar durch eine separate Klappe am primären Abgaskühler) wird vorzugsweise vom Motormanagement als Funktion des Lastzustands des Motors und dem Taupunkt des Abgas-/Luftgemisches bestimmt. Der Taupunkt des Abgas-/Luftgemisches (= erster Mischgasstrom) kann dabei entweder aus den separat gemessenen bzw. berechneten Wassergehalten der beiden Gasströme (= Teilgasströme) ermittelt oder direkt mittels eines Feuchte- oder Taupunkt-Sensors gemessen werden.

Der Vorteil der Erfindung und ihrer Ausgestaltungen besteht darüber hinaus darin, dass ein Ansaugmodul angegeben wird, das für eine bedarfsgerechte homogene Luftverteilung auf die einzelnen Zylinder hinsichtlich Druck, Temperatur und Luftzusammensetzung, insbesondere in Bezug auf Frischluft und Abgas, sowie ggf. für die Bereitstellung von Meßgrößen, wie Druck, Temperatur, Luftmassenstrom und/oder Abgasrückführrate, die zum optimalen Betrieb des Motors durch ein elektronisches Motormanagement nötigt sind, optimal ausgelegt ist. Ferner ist sichergestellt, dass die Durchmischung der angesaugten Luft die Temperatursträhnigkeit nahezu vollständig auflöst, so dass den einzelnen Zylindern des Motors Ansaugluft mit homogener Temperaturverteilung zugeführt und damit das Verschleiß- und Emissionsverhalten des Motors günstig beeinflusst wird. Zusätzlich kann die Vorrichtung mit einer Kraftstoff-Einspritzeinrichtung oder einer Einspritzeinrichtung für sonstige Additive ausgestattet sein, deren homogene Verteilung auf die einzelnen Zylinder wichtig ist. Ebenso kann die Vorrichtung auch mit einem Luftfilter, z.B. bei einem Fahrzeug ausgestattet sein.

Somit wird in besonders einfacher Art und Weise der Gedanke der Integration weiterer Komponenten zum bedarfsgerechten Management der Ansaugluft erweitert. Dieses bedarfsgerechte Ansaugluft-Management ist eine besonders kostengünstige und bauraumoptimierte Steuerung und/oder Regelung derjenigen physikalischen Größen, die in der Lage sind, die Anforderungen des Motor-Managements hinsichtlich priorisierter Reduktion des Kraftstoffverbrauchs, Reduktion der Abgasemissionen, Maximierung der Motorleistung und/oder Vermeidung klopfender Verbrennung zu erfüllen.

Nachfolgend wird ein Ausführungsbeispiel der Erfindung anhand der schematischen Zeichnung näher erläutert. Darin zeigen:
- FIG 1 bis 5: schematisch eine Vorrichtung zur Zuführung eines Gasgemisches zu Saugstutzen von Zylindern eines Verbrennungsmotors mit verschiedenen Ausführungsformen für mindestens ein Mittel zur Einstellung der stofflichen Zusammensetzung und/oder zur Einstellung der physikalischen Eigenschaft des Gasgemisches, und
- FIG 6: ein Diagramm zur Darstellung des Einflusses der Gaszusammensetzung auf den Taupunkt des Gasgemisches.

Einander entsprechende Teile sind in allen Figuren mit den gleichen Bezugszeichen versehen.

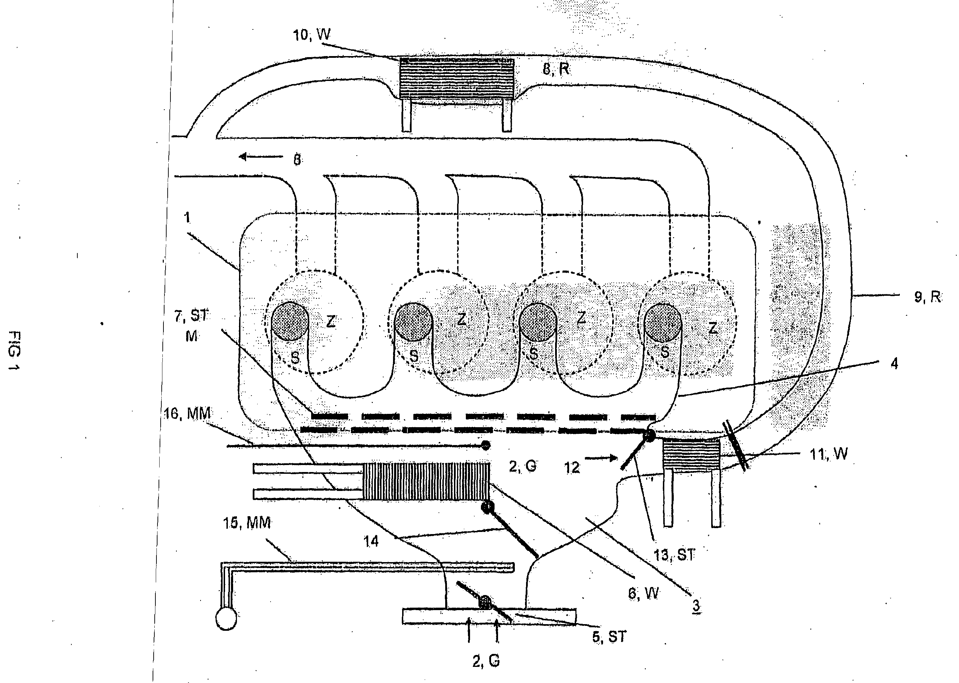

Figur 1 zeigt einen Motorblock 1 mit Zylindern Z mit einer Vorrichtung 3 zur Zuführung eines Gasgemisches G, z.B. Luft, zu Saugstutzen S der Zylinder Z. Die Vorrichtung 3 ist beispielhaft als ein zur Kühlung des Gasgemisches G vorgesehenes Ansaugmodul ausgebildet. Das Gasgemisch G wird im weiteren als angesaugte Luft 2 bezeichnet. Die Vorrichtung 3 wird im weiteren Ansaugmodul 3 genannt. Bei der angesaugten Luft 2 kann es sich dabei um so genannte Ladeluft handeln.

Das Ansaugmodul 3 umfasst motorseitige Ansaugluftführungskanäle 4 sowie je nach Motorvariante ansaugseitig, auf der vom Motorblock 1 abgewandten Seite eine Drosselklappe 5, bei der es sich um ein erstes Mittel ST, insbesondere ein Steuermittel handelt. Zur Kühlung der angesaugten Luft 2 umfasst das Ansaugmodul 3 einen als Wärmetauscher W ausgebildeten Ladeluftkühler 6. Die angesaugte Luft 2 strömt je nach Stellung der Drosselklappe 5 (falls vorhanden) in das Ansaugmodul 3 und wird bei der Durchströmung des Ladeluftkühlers 6 gekühlt. Die angesaugte und gekühlte Luft 2 gelangt weiter über die Ansaugluftführungskanäle 4 in die einzelnen Zylinder Z des Motorblocks 1. Zwischen Ladeluftkühler 6 und den Ansaugluftführungskanälen 4 ist als ein weiteres oder optionales Mittel ST ein Mischer M zur Homogenisierung der physikalischen Eigenschaften des Gasgemisches - der angesaugten Luft 2 - angeordnet. Der Mischer M dient dabei der Durchmischung der angesaugten Luft 2, und ist bevorzugt als Statikmischer 7 ausgebildet, der die angesaugte und zum Motorblock 1 gelangende Luft 2 (auch Ansaugluft genannt) derart mischt, dass in jedem Ansaugluftführungskanal 4 und damit in jedem Zylinder Z in etwa Luft gleicher Temperatur ankommt.

Je nach Art und Ausbildung des Mischers M zur Durchmischung der angesaugten Luft 2 kann dieser als eine separate Komponente oder als Ausgestaltung einer ohnehin vorhandenen Komponente des Ansaugmoduls 3 gebildet sein.

Die Durchmischung der angesaugten Luft 2 ist besonders dann wichtig, wenn zum Motorblock 1 nicht nur gekühlte angesaugte Luft 2, sondern z. B. im Falle von Dieselmotoren auch in einer Abgasrückführung R zurückgeführtes Abgas 8 gelangt. Gezeigt ist eine Situation mit einem Zuführkanal 9 für eine Abgasrückführung R vom Motorblock 1. Im Zuführkanal 9 ist eine zweistufige Abgaskühlung mit einem ersten und einem zweiten Abgaskühler 10, 11, welche jeweils als Wärmetauscher W ausgebildet sind, vorgesehen. Am Ende des Zuführkanals 9, im Bereich eines Einlasses 12 des Zuführkanals 9 in das Ansaugmodul 3 ist als ein weiteres oder optionales Mittel ST zum Zuführen von rückgeführten Abgas 8 eine Regelklappe 13 vorgesehen. Je nach Stellung der Regelklappe 13 gelangt neben der angesaugten Luft 2 Abgas 8 in das Ansaugmodul 3.

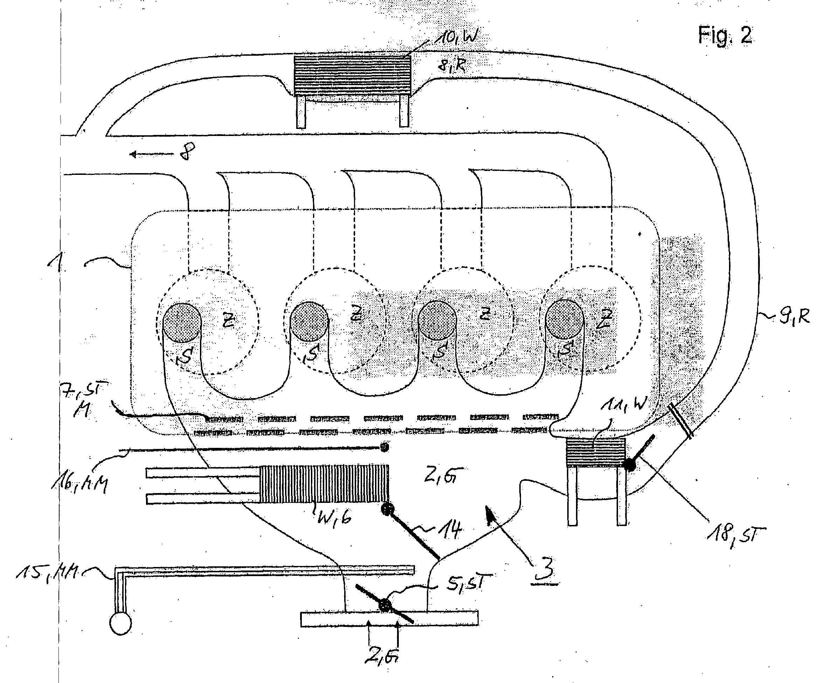

Wie in Figur 2 gezeigt, kann es sich alternativ dazu bei dem Mittel ST auch um eine Bypassklappe 18 handeln, mittels welcher vorwiegend die Abgastemperatur regelbar ist.

Das Abgas 8 hat trotz der zweistufigen Kühlung nicht notwendig die gleiche Temperatur wie die gekühlte, angesaugte Luft 2. Daher ist vorzugsweise zwischen dem Einlass 12 der Abgasrückführung R und dem Ansaugluftführungskanal 4 der Mischer M auch zur Durchmischung des rückgeführten Abgases 8, insbesondere zur Durchmischung des rückgeführten Abgases 8 mit der angesaugten Luft 2 vorgesehen. Je nach Art und Ausbildung kann die Regelklappe 13, welche zum Zuführen des rückgeführten Abgases 8 in das Ansaugmodul 3 mit der angesaugten Luft 2 dient, auch Bestandteil des Statikmischers 7 sein, so dass ein zusätzliches Mittel ST sicher vermieden ist. Der Statikmischer 7 ist somit auch dazu vorgesehen, angesaugte Luft 2 und zurückgeführtes Abgas 8 zu vermischen, so dass in jedem Ansaugluftführungskanal 4 und damit in jedem Zylinder Z in etwa Luft gleicher Temperatur und Zusammensetzung ankommt. Alternativ oder zusätzlich können ohnehin im Ansaugmodul 3 vorhandene Komponenten in ihrer Form, Anordnung und/oder Abmessung für eine möglichst gute Durchmischung entsprechend ausgebildet sein.

In Richtung der angesaugten Luft 2 vor dem Ladeluftkühler 6 ist eine Bypassklappe 14 angeordnet. Bei geöffneter Bypassklappe 14 wird ein Teil der angesaugten Luft 2 am Ladeluftkühler 6 vorbei zu den Ansaugluftführungskanälen 4 geführt. Die Stellung der Bypassklappe 14 wird in Abhängigkeit z.B. von der Umgebungstemperatur und/oder der angeforderten Motorleistung und/oder den Erfordernissen eines Abgasbehandlungssystems und/oder der Klopfneigung des Brenngasgemisches durch ein nicht gezeigtes elektronisches Motormanagement-System bedarfsgerecht eingeregelt. Bekanntermaßen ist bei geringer Umgebungstemperatur, z.B. im Winter und/oder kaltem Motor, keine oder eine geringere Kühlung der angesaugten Luft 2 durch den Ladeluftkühler 6 erforderlich, während im Sommer und/oder bei heißem Motor und/oder bei hoher angeforderter Motorleistung, z.B. während eines Überholvorgangs eine stärkere Abkühlung der Ladeluft vorteilhaft ist. Durch die variable Mischung von gekühlter und ungekühlter angesaugter Luft 2 kann innerhalb einer gewissen Bandbreite eine beliebige und nahezu verzögerungsfrei variable Temperatur der angesaugten Luft 2 eingestellt werden, wobei der in Strömungsrichtung der angesaugten Luft 2 angeordnete Statikmischer 7 evtl. Temperatur- und/oder Konzentrationssträhnigkeiten infolge der Zuführung gekühlter und ungekühlter angesaugter Luft bzw. zurückgeführtem Abgas auflöst.

Zur Bereitstellung von Meßgrößen, die von einer nicht dargestellten Verarbeitungseinrichtung (auch "elektronisches Motormanagement" genannt) empfangen, ausgewertet und verarbeitet werden, sind u.a. als Messmittel MM zur Erfassung der stofflichen Zusammensetzung und/oder mindestens einer physikalischen Eigenschaft der den Saugstutzen S zu zuführenden angesaugten Luft 2 ein Massenstrommesser 15 (oder Volumenstrommesser) und ein Temperaturfühler 16 vorgesehen. Mit diesen Meßgrößen und einem nicht gezeigten optional vorgesehenen Drucksensor und weiteren optionalen auf der Abgasseite angeordneten, nicht dargestellten Sensoren sowie den schon genannten Mitteln ST oder Stellmitteln in Form von Luftklappen, Ventilen und Einspritzpumpen ist die Verarbeitungseinrichtung in der Lage, den Motor in einem gewünschten Betriebszustandsfenster zu betreiben. Der Massenstrommesser 15 ist zwischen Drosselklappe 5 und Ladeluftkühler 6 und der Temperaturfühler 16 zwischen Ladeluftkühler 6 und Statikmischer 7 angeordnet. Aber auch andere vorteilhafte Anordnungen sind denkbar. Im Bereich des Einlasses 12 kann ein weiterer Massenstrommesser (nicht dargestellt) angeordnet sein, der dann Meßwerte zu einer Abgasrückführrate liefert, oder als ein Kennfeld hinterlegt, mit dem von der über einen Schrittmotor bekannten Klappenstellung und eventuell weiterer Signale auf die Abgasrückführrate geschlossen werden kann.

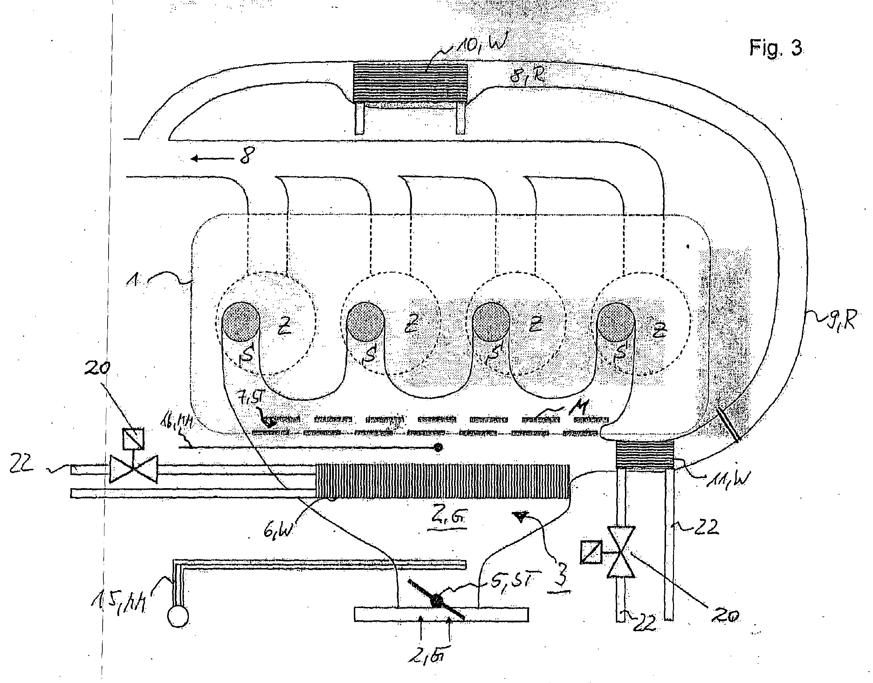

Wie in Figur 3 gezeigt, können als weitere Mittel ST auch Ventile 20 vorgesehen sein, die in Leitungen 22, die mit im Ansaugmodul 3 angeordneten Wärmetauschern W verbunden sind, positioniert sind. Diese Ventile 20 können z.B. extern angesteuert werden und über einen veränderten Massenstrom des Wärmeträgermediums (Fluides) die Temperatur des angesaugten Gasgemisches 2 hinter dem Wärmetauscher W regeln.

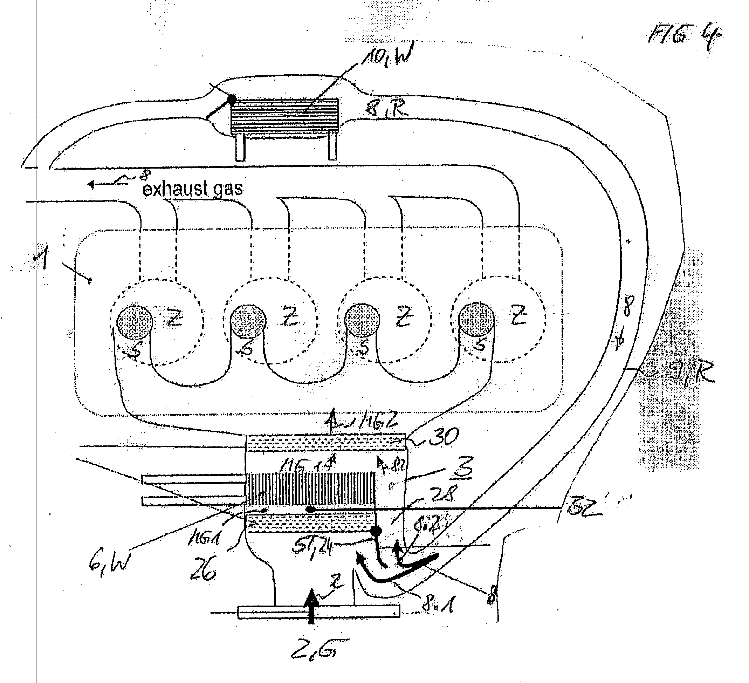

Figur 4 zeigt eine weitere Ausführungsform für das Mittel ST, welches als eine variable Luftweiche oder Bypassklappe 24 strömungsausgangsseitig der Abgasrückführung R im Bereich des Ansaugmoduls 3 angeordnet ist. Im Ansaugmodul 3 wird das Abgas 8 anhand des Mittels ST in zwei variable Gasströme 8.1 und 8.2 für das Abgas 8 aufgeteilt. Dabei wird ein erster Gasstrom 8.1 (auch Abgasteilstrom genannt) der angesaugten Luft 2 (auch Ladeluftstrom genannt) zugeführt. Die angesaugte Luft 2 und der erste Gasstrom 8.1 werden einer ersten Mischeinrichtung 26 zur homogenen Mischung und Erzeugung eines ersten Mischgasstroms MG1 zugeführt. Für eine einfache Trennung des Abgasstroms in zwei Gasströme 8.1 und 8.2 ist die Bypassklappe 24 bevorzugt im Strömungseingangsbereich der ersten Mischeinrichtung 26 angeordnet.

Der erste Mischgasstrom MG1 wird anschließend im Ladeluftkühler 6 abgekühlt. Ausgangsseitig des Ladeluftkühlers 6 wird der abgekühlte erste Mischgasstrom MG1 mit einem zweiten Gasstrom 8.2 des Abgases 8, der mittels Stellung der Bypassklappe 24 an der ersten Mischeinrichtung 26 und dem Ladeluftkühler 6 in einem Bypass 28 vorbeigeführt, einer zweiten Mischeinrichtung 30 zugeführt, die den ersten Mischgasstrom MG1 und den zweiten Gasstrom 8.2 zu einem zweiten Mischgasstrom MG2 homogen mischt, der anschließend auf die einzelnen Ansaugrohre oder Saugstutzen S geführt wird.

Zur Einstellung der Verbrennungstemperatur mittels variabler Kühlung des zweiten Gasgemisches MG2 (= Abgas-/Ansaugluft-/Abgasgemisches) unter Berücksichtigung des Taupunktes des ersten Gasgemisches MG1 (= Abgas-/Ansaugluftgemisch) kann zum einen der Wassergehalt der beiden Gasströme 8.1 und 8.2 ermittelt werden. Alternativ kann, wie in Figur 4 dargestellt, ein Feuchte- oder Taupunkt-Sensor 32 im Ansaugmodul 3, insbesondere im Bereich zwischen der ersten Mischeinrichtung 26 und dem Ladeluftkühler 6 angeordnet sein.

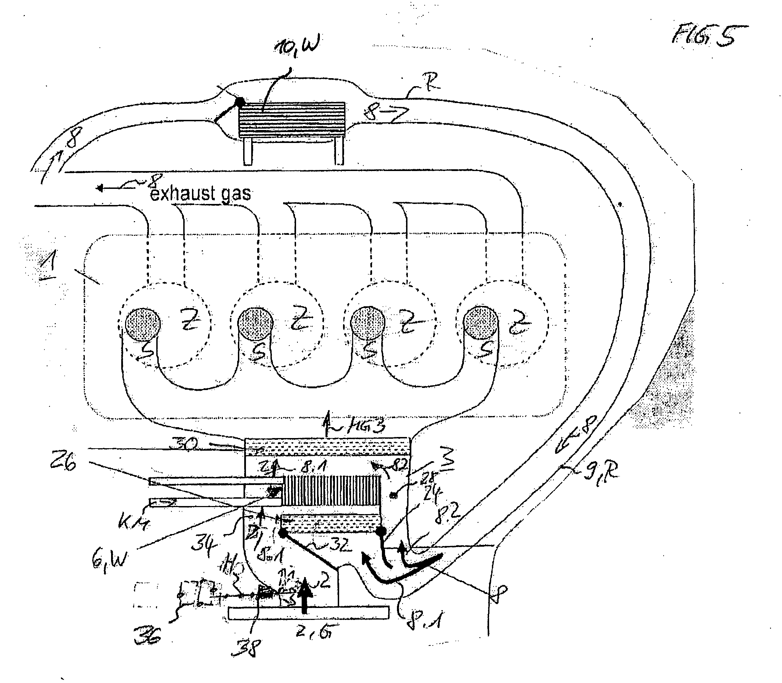

In der Figur 5 ist eine weitere alternative Ausführungsform zur Aufteilung des Abgases 8 in zwei Gasströme 8.1 und 8.2 dargestellt. Dabei umfasst das Mittel ST die Bypassklappe 24 und ein weiteres Klappenelement 32, z. B. eine Bypassklappe, welches den ersten Gasstrom 8.1 zusammen mit Ladeluftstrom 2 in einem weiteren Bypass 34 an der ersten Mischeinrichtung 26 und dem Ladeluftkühler 6 vorbeiführt und der zweiten Mischeinrichtung 30 zuführt, wobei die zweite Mischeinrichtung 30 zur Mischung des ersten Gasstroms 8.1, des Ladeluftstroms 2 und des zweiten Gasstroms 8.2 vorgesehen ist und ein daraus strömungsausgangsseitig resultierender dritter Mischgasstrom MG3 den Saugstutzen 2 zuführbar ist. Dies ermöglicht in einfacher Art und Weise eine Zuführung von weitgehend ungekühltem Abgas 8 zu den Saugstutzen 2, wodurch ein Kaltstart im Winter unterstützt wird.

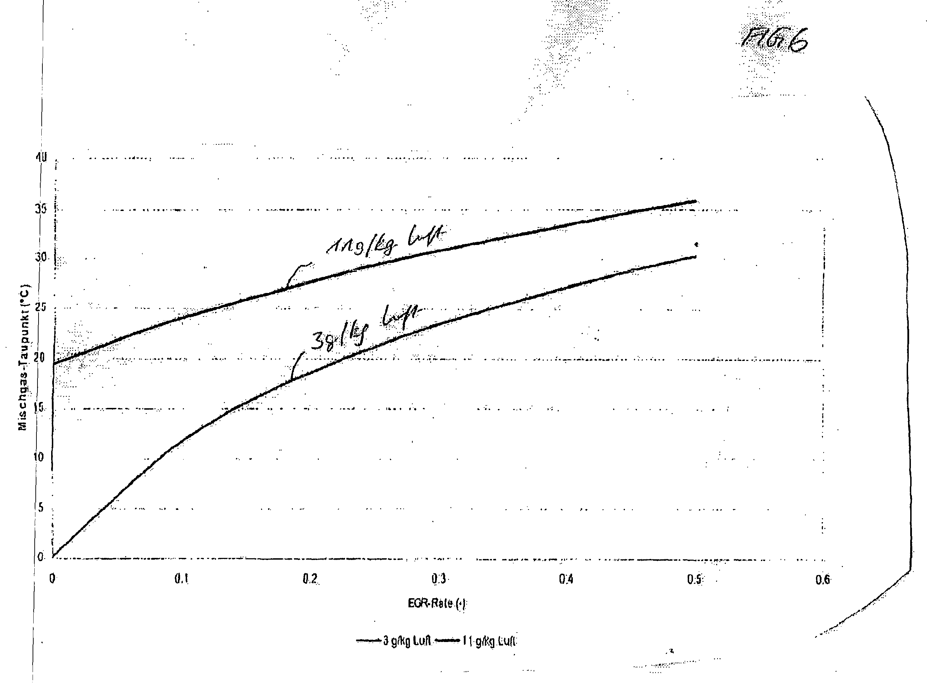

Figur 6 zeigt den Taupunktverlauf des ersten Mischgases MG1 bei variierter Abgas-Rückführrate, d.h. in Abhängigkeit von der Aufteilung des Abgases 8 in die Gasströme 8.1 und 8.2, für zwei verschiede absolute Feuchten der Umgebungsluft. von 3g/kg und 11 g/kg. Das Diagramm zeigt, wie sich der Taupunkt mit zunehmendem Ladeluftanteil verringert, und wie bei unterschiedlicher Feuchte der Umgebungsluft verschiedene Abgasrückführraten ohne Kondensationsgefahr ermöglicht sind.

Zusammenfassend dient der zweite geregelte Bypass 34 einer variablen Anhebung der Temperatur des angesaugten Gasgemisches G, d.h. der angesaugten Luft 2, in dem der kühlende Wärmeübertrager oder Ladeluftkühler 6 umgangen wird. Alternativ zu diesem zweiten Bypass 34 kann auch der Ladeluftkühler 6 mit entsprechenden Ventilen ausgestattet sein, um den Kühlmittelmassenstrom zu reduzieren oder gar zu unterbinden oder um den Kühlmittelmassenstrom z.B. mittels eines 2/3-Wegeventils mit heißem Kühlmittel direkt vom Motor zu beaufschlagen.

In einer weiteren Ausgestaltung der Erfindung kann der Ladeluftkühler 6 in bekannter Weise mit Kühlmittel KM eines Niedertemperaturkreislaufs beaufschlagt sein, der optional auch einen nicht näher dargestellten Verdampfer umfassen kann, mit dem das Kühlmittel noch weiter abgekühlt werden kann.

Eine weitere Ausführungsform der Erfindung ist beispielsweise durch eine Einspritzung von Wasser H in den Ansaug-Gemischgasstrom (= angesaugte Luft 2) möglich, um die angesaugte Luft 2 z. B. nach Durchströmung des Ladeluftkühlers durch Verdunstung kleinster Wassertröpfchen, z. B. auch erst während des Verdichtungs- und/oder Verbrennungsprozesses, noch weiter abzukühlen. Dabei kann das Wasser H an verschiedenen Stellen des Gasweges in den Zylinder hinein eingedüst oder eingespritzt werden.

Alternativ zur Wassereinspritzung kann als Wasser H Kondenswasser einer Klimaanlage genutzt werden, indem das Kondenswasser in einem Wasserbehälter 36 zwischengespeichert und anschließend ebenfalls über eine Einspritzvorrichtung 38 an geeigneter Stelle im Gasweg eingespritzt wird. Insbesondere wird das Kondenswasser bedarfsgerecht in die angesaugte Luft 2 oder Ladeluft des Verbrennungsmotors 1 hinein vernebelt. In einer möglichen Ausführungsform wird dazu das angesammelte Kondenswasser aus dem Wasserbehälter 36 einer nicht näher dargestellten Hochdruckpumpe und nachfolgend einer nicht näher dargestellten Filtereinrichtung und/oder mehreren Zerstäuberdüsen zugeführt, die sich beispielsweise im Ansaugluftweg zu den Zylindern Z des Verbrennungsmotors 1 oder in den KraftstoffEinspritzdüsen befinden. Dabei kann beispielsweise die Einspritzvorrichtung 38 als ein Piezo-Vernebler ausgebildet sein, der den Wassermassenstrom wesentlich feiner vernebeln kann.

In einer weiteren Ausführungsform kann der im Luftstrom der angesaugten Luft 2 enthaltene Wasseranteil (= Tröpfchenanteil) durch Statikmischer 7 auf die einzelnen Saugrohre oder Saugstutzen S gleichmäßig verteilt werden. Weiterhin kann der Wasseranteil durch einen geeigneten Sensor an einer geeigneten Stelle gemessen und gesteuert bzw. geregelt werden.

Darüber hinaus kann in einer weiteren Ausführungsform der Erfindung das zugeführte Wasser H mit einem weiteren Stoff vor der Verdüsung oder Verdunstung gemischt werden und/oder durch eine weitere nicht näher dargestellte Kühl- oder Heizeinrichtung in seiner Temperatur verändert werden. Dabei können diese Komponenten teilweise oder ganz im Ansaugmodul 3 als Wärmetauscher W integriert sein.

Auch können weitere Sensoren oder Messmittel MM vorgesehen sein, die die verfügbare Wassermenge erfassen oder Messdaten zu deren Berechnung liefern. Bei fehlendem Wasser H kann die Motorsteuerung dies entsprechend berücksichtigen, so dass keine für den Motor oder die Umwelt kritischen Zustände erreicht werden.

In einer weiteren alternativen Ausführungsform kann einer der Gasströme 8.1 oder 8.2 des Abgases 8 direkt nach dem Turboverdichter der angesaugten Luft 2 zugemischt werden. Die variable Mischklappe oder Bypassklappe 24 wäre dann schon im Bereich dieser Einmündungsstelle anzuordnen.

Die mit der Erfindung erzielten Vorteile bestehen insbesondere darin, dass zur Temperaturerniedrigung des ersten Mischgases MG1 aus angesaugter Luft 2 und erstem Abgasstrom 8.1 gegenüber dem bekannten Stand der Technik ein geringerer Aufwand erforderlich ist, indem das erste Mischgas MG1 möglichst gut gekühlt wird, um den Wärmeeintrag durch die Abgaskomponenten zu kompensieren.

Durch die Vermischung des zurückgeführten Abgasstroms (= erster Gasstrom 8.1) mit der angesaugten Luft 2 kann der Taupunkt des zu kühlenden ersten Gasgemisches MG1 abgesenkt werden, so dass ein Spielraum für eine weitere Abkühlung des angesaugten Gasgemisches geschaffen ist, ohne dass mit Kondensation von korrosiven Bestandteilen des Abgases gerechnet werden muss.

Durch eine gemeinsame Abkühlung des ersten Gasstroms 8.1 des Abgases 8 und der angesaugten Luft 2 liegt das Temperaturniveau, auf das gekühlt werden muss höher, so dass die Anforderungen an die Kühlvorrichtung (= Ladeluftkühler 6) aufgrund der größeren verfügbaren Temperaturdifferenz gegenüber der Umgebungstemperatur vereinfacht werden. Beispielsweise kann auf einen Verdampfer zur einseitigen Abkühlung der angesaugten Luft 2 verzichtet werden oder es kann die Vorlauftemperatur bei Einsatz einer indirekten Ladeluftkühlung angehoben werden. Bei Einsatz eines konventionellen luftbeaufschlagten Ladeluftkühlers kann dieser entsprechend kleiner dimensioniert werden.

Durch eine Vorkühlung des zurückgeführten Abgases 8, insbesondere des ersten Gasstromes 8.1 kann die Temperatur so weit abgesenkt werden, dass insbesondere nach Mischung mit der Ladeluft oder angesaugten Luft 2 der Einsatz eines Gemischgaskühlers aus Aluminium als Ladeluftkühler möglich ist. Insbesondere dann, wenn mittels des variablen Bypasstroms durch den Bypass 28 nur soviel Abgas der Ladeluft zugemischt wird, dass eine Unterschreitung des Taupunkts im ersten Mischgaskühler (= erste Mischeinrichtung 26) ausgeschlossen wird. Darüber hinaus ist durch die Vorkühlung der Einsatz eines Ansaugmoduls 3 aus Kunststoff möglich.

Zusätzlich zu den Vorteilen der Wassereinspritzung ist eine so genannte On-Board-Gewinnung von ausreichend reinem Wasser H aus der nicht näher dargestellten Klimaanlage vorteilhaft, d.h. ein Nachfüllen von Vorratsbehältern ist vermieden. Im Winter wird zwar kein Wasser verfügbar sein, jedoch ist dann die Ladeluft 2 bzw. das erste Mischgas MG1 weit genug abkühlbar, dass ohne On-Board-Gewinnung von Wasser kritisch hohe Verbrennungstemperaturen vermieden werden können. Bei heißen Umgebungstemperaturen im Sommer hingegen ist auch meist die Klimaanlage in Betrieb, wodurch Kondenswasser für die zusätzliche Wassereinspritzung anfällt.

## Patentansprüche

1. Vorrichtung zur Zuführung eines Gasgemisches (G) zu Saugstutzen (S) von Zylindern (Z) eines Verbrennungsmotors, wobei mindestens ein Messmittel (MM) zur Erfassung der stofflichen Zusammensetzung und/oder mindestens einer physikalischen Eigenschaft des den Saugstutzen (S) zu zuführenden Gasgemisches (G) und mindestens ein Mittel (ST) zur Einstellung der stofflichen Zusammensetzung und/oder zur Einstellung der physikalischen Eigenschaft des Gasgemisches (G) entsprechend vorgegebenen Anforderungen eines Motormanagements vorgesehen sind wobei ein in Richtung der einströmenden angesaugten Luft (2) vor einem Mischer (M) in das Ansaugmodul (3) mündender Einlass (12) für eine Abgasrückführung (R) vorgesehen ist **dadurch gekennzeichnet, dass** die Abgasrückführung (R) zwei Abgaskühler (10, 11) zur Kühlung des rückgeführten Abgases (8) umfasst und eine mehrstufige Abgaskühlung mit einem ersten und einem zweiten jeweils als Abgaskühler (10, 11) ausgebildeten Wärmetauscher (W) vorgesehen ist und der zweite Abgaskühler (11) im Ansaugmodul (3) angeordnet ist.

2. Vorrichtung nach Anspruch 1, **dadurch gekennzeichnet, dass** zusätzlich mindestens ein Mittel (ST) vorgesehen ist, das Strähnigkeiten physikalischer Größen auflöst.

3. Vorrichtung nach Anspruch 1 oder 2, **dadurch gekennzeichnet, dass** der Mischer (M) als Statikmischer (7) ausgebildet ist.

4. Vorrichtung nach einem der Ansprüche 1 bis 3, **dadurch gekennzeichnet, dass** das zusätzliche Mittel (ST) als eine Regelklappe (13) zum angepassten Zuführen von rückgeführten Abgas (8) ausgebildet ist.

5. Vorrichtung nach einem der Ansprüche 1 bis 4, **dadurch gekennzeichnet, dass** das zusätzliche Mittel (ST) als eine Bypassklappe (18) zur Regelung der zugeführten Abgastemperatur ausgebildet ist.

6. Vorrichtung nach einem der Ansprüche 1 bis 5, **dadurch gekennzeichnet, dass** das zusätzliche Mittel (ST) ein Steuerventil (20) in einer mit einem Wärmetauscher (W) verbundenen Leitung (22) zur Regelung der Temperatur des angesaugten Gasgemisches (G) ist.

7. Vorrichtung nach einem der vorherigen Ansprüche, **dadurch gekennzeichnet, dass** dass zusätzliche Mittel (ST) als Schalldämpfer verwendbar ist.

8. Vorrichtung nach einem der Ansprüche 1 bis 7, **dadurch gekennzeichnet, dass** ein Ladeluftkühler (6) zur Kühlung von angesaugter Luft (2) vorgesehen ist.

9. Vorrichtung nach Anspruch 8, **gekennzeichnet durch** eine Bypassklappe (14), die in Richtung der einströmenden angesaugten Luft (2) vor oder nach dem Ladeluftkühler (6) angeordnet ist.

10. Vorrichtung nach Anspruch 9, **dadurch gekennzeichnet, dass** die Bypassklappe (14) in einer ersten Endstellung zur Führung im wesentlichen der gesamten angesaugten Luft (2) über den Ladeluftkühler (6) und in einer zweiten Endstellung zur Führung der angesaugten Luft (2) am Ladeluftkühler (6) vorbei vorgesehen ist, insbesondere mit beliebig einstellbaren Zwischenstellungen.

11. Vorrichtung nach einem der Ansprüche 1 bis 10, **dadurch gekennzeichnet, dass** ansaugseitig im Ansaugmodul (3) eine Drosselklappe (5) angeordnet ist.

12. Vorrichtung nach Anspruch 11, **dadurch gekennzeichnet, dass** vor oder nach der Drosselklappe (5) als Messmittel (MM) ein Massenstrommesser (15) angeordnet ist.

13. Vorrichtung nach Anspruch 11 oder 12, **dadurch gekennzeichnet, dass** vor oder nach der Drosselklappe (5) als Messmittel (MM) ein Temperaturfühler (16) angeordnet ist.

14. Vorrichtung nach einem der Ansprüche 1 bis 13, **gekennzeichnet durch** einen weiteren Wärmetauscher (W) und/oder insbesondere elektrischen Heizer zur temporären Beheizung der angesaugten Luft

15. Vorrichtung nach einem der Ansprüche 1 bis 14, **gekennzeichnet durch** ein integriertes Ansaugmodul (3).

16. Vorrichtung nach einem der Ansprüche 1 bis 15, **dadurch gekennzeichnet, dass** das zusätzliche Mittel (ST) als eine Klappe, insbesondere Bypassklappe zum Zuführen von zurückgeführten Abgas (8) in mindestens zwei variablen Gasströmen (8.1, 8.2) im Bereich eines Ansaugmoduls (3).

17. Vorrichtung nach Anspruch 16, **dadurch gekennzeichnet, dass** das zusätzliche Mittel (ST) einen ersten Gasstrom (8.1) einem Ladeluftstrom (2) vor einer ersten Mischeinrichtung (26) zuführt und die erste Mischeinrichtung (26) zur Mischung des ersten Gasstroms (8.1) mit Ladeluftstrom (2) vor Zuführung eines daraus resultierenden ersten Mischgasstroms (MG1) in einen Ladeluftkühler (6) vorgesehen ist.

18. Vorrichtung nach Anspruch 17, **dadurch gekennzeichnet, dass** das zusätzliche Mittel (ST) einen zweiten Gasstrom (8.2) in einem Bypass (28) an der ersten Mischeinrichtung (26) und dem Ladeluftkühler (6) vorbeiführt und eine zweite Mischeinrichtung (30) zur Mischung des zweiten Gasstroms (8.2) mit dem ersten Mischgasstrom (MG1) vorgesehen ist, wobei ein daraus resultierender zweiter Mischgasstrom (MG2) den Saugstutzen (S) zuführbar ist.

19. Vorrichtung nach Anspruch 18, **dadurch gekennzeichnet, dass** das zusätzliche Mittel (ST) eine weiteres Klappenelement (32) aufweist, welches den ersten Gasstrom (8.1) zusammen mit Ladeluftstrom (2) in einem weiteren Bypass (34) an der ersten Mischeinrichtung (26) und dem Ladeluftkühler (6) vorbeiführt und der zweiten Mischeinrichtung (30) zuführt, wobei die zweite Mischeinrichtung (30) zur Mischung des ersten Gasstroms (8.1), des Ladeluftstroms (2) und des zweiten Gasstroms (8.2) vorgesehen ist, wobei ein daraus resultierender dritter Mischgasstrom (MG3) den Saugstutzen (S) zuführbar ist.

20. Vorrichtung nach einem der Ansprüche 1 bis 19, **dadurch gekennzeichnet, dass** eine Einspritzvorrichtung (38) zum zusätzlichen Zuführen von Wasser (H) in den Ladeluftstrom (2) im Bereich des Ansaugmoduls (3) integriert ist.

21. Vorrichtung nach Anspruch 20, **dadurch gekennzeichnet, dass** als Wasser (H) Kondenswasser einer Klimaanlage zuführbar ist.

22. Verwendung einer Vorrichtung nach einem der Ansprüche 1 bis 21, wobei die Vorrichtung mit einer Einrichtung zur Einspritzung von Additiven ausgestattet ist, als Einrichtung zur Einspritzung von Additiven.

## Claims

1. A device for supplying a gas mixture (G) to induction pipes (S) of cylinders (Z) of an internal combustion engine, wherein at least one measuring means (MM) for detecting the material composition and/or at least one physical property of the gas mixture (G) to be supplied to the induction pipes (S), and at least one means (ST) for adjusting the material composition and/or for adjusting the physical property of the gas mixture (G) in accordance with defined requirements of an engine management system are provided, wherein an inlet (12), which leads into the intake module (3), for an exhaust gas recirculation (R) is provided upstream - in the direction of the inflowing intake air (2) - of a mixer (M),
**characterized in that** the exhaust gas recirculation (R) comprises two EGR coolers (10, 11) for cooling the recirculated exhaust gas (8), and a multi-staged EGR cooler comprising a first and a second heat exchanger (W) - each designed as EGR cooler (10, 11) - is provided, and the second EGR cooler (11) is disposed in the intake module (3).

2. The device according to claim 1, **characterized in that** at least one means (ST) for disintegrating strands of physical quantities is also provided.

3. The device according to claim 1 or 2, **characterized in that** the mixer (M) is designed as a static mixer (7).

4. The device according to one of the claims 1 to 3, **characterized in that** the additional means (ST) is designed as a control flap (13) for the adapted supply of recirculated exhaust gas (8).

5. The device according to one of the claims 1 to 4, **characterized in that** the additional means (ST) is designed as a bypass flap (18) for controlling the supplied exhaust gas temperature.

6. The device according to one of the claims 1 to 5, **characterized in that** the additional means (ST) is a control valve (20), which is disposed in a line (22) connected to a heat exchanger (W), for controlling the temperature of the gas mixture (G) that is suctioned in.

7. The device according to one of the preceding claims, **characterized in that** the additional means (ST) can be used as a muffler.

8. The device according to one of the claims 1 to 7, **characterized in that** a charge air cooler (6) is provided for cooling intake air (2).

9. The device according to claim 8, **characterized by** a bypass flap (14) disposed upstream or downstream - in the direction of the inflowing intake air (2) - of the charge air cooler (6).

10. The device according to claim 9, **characterized in that** the bypass flap (14), in a first end position, is provided for guiding substantially all of the intake air (2) through the charge air cooler (6), and, in a second end position, is provided for guiding the intake air (2) past the charge air cooler (6), in particular with arbitrarily adjustable intermediate settings.

11. The device according to one of the claims 1 to 10, **characterized in that** a throttle valve (5) is disposed in the intake module (3) on the intake side.

12. The device according to claim 11, **characterized in that** a mass flowmeter (15) is disposed upstream or downstream of the throttle valve (5), as the measuring means (MM).

13. The device according to claim 11 or 12, **characterized in that** a temperature sensor (16) is disposed upstream or downstream of the throttle valve (5), as the measuring means (MM).

14. The device according to one of the claims 1 to 13, **characterized by** a further heat exchanger (W) and/or, in particular, an electrical heater for temporarily heating the intake air (2).

15. The device according to one of the claims 1 to 14, **characterized by** an integrated intake module (3).

16. The device according to one of the claims 1 to 15, **characterized in that** the additional means (ST) is designed as a flap, in particular a bypass flap for supplying recirculated exhaust gas (8) in at least two variable gas flows (8.1, 8.2) in the region of an intake module (3).

17. The device according to claim 16, **characterized in that** the additional means (ST) supplies a first gas flow (8.1) to a charge air flow (2) upstream of a first mixing device (26), and the first mixing device (26) is provided for mixing the first gas flow (8.1) with charge air flow (2) before supplying a resulting first mixed gas flow (MG1) to a charge air cooler (6).

18. The device according to claim 17, **characterized in that** the additional means (ST) directs a second gas flow (8.2) in a bypass (28) past the first mixing device (26) and the charge air cooler (6), and a second mixing device (30) is provided for mixing the second gas flow (8.2) with the first mixed gas flow (MG1), wherein a resulting second mixed gas flow (MG2) can be supplied to the induction pipes (S).

19. The device according to claim 18, **characterized in that** the additional means (ST) comprises a further flap element (32) which directs the first gas flow (8.1) together with charge air flow (2) in a further bypass (34) past the first mixing device (26) and the charge air cooler (6), and supplies same to second mixing device (30), wherein the second mixing device (30) is provided for mixing the first gas flow (8.1), the charge air flow (2), and the second gas flow (8.2), wherein a resulting third mixed gas flow (MG3) can be supplied to the induction pipes (S).

20. The device according to one of the claims 1 to 19, **characterized in that** an injection device (38) is integrated in the region of the intake module (3) for the additional supply of water (H) into the charge air flow (2).

21. The device according to claim 20, **characterized in that** condensation water from an air conditioning system can be supplied as water (H).

22. The use of a device according to one of the claims 1 to 21, wherein the device is equipped with a device for injecting additives, as a device for injecting additives.

## Revendications

1. Dispositif servant à l'alimentation d'un mélange gazeux (G) à des tubulures d'admission (S) de cylindres (Z) d'un moteur à combustion interne, où il est prévu au moins un moyen de mesure (MM) servant à la détection de la composition de matière et / ou d'au moins une propriété physique du mélange gazeux (G) à fournir aux tubulures d'admission (S), et au moins un moyen (ST) servant au réglage de la composition de matière et / ou servant au réglage de la propriété physique du mélange gazeux (G) correspondant aux exigences prédéfinies d'une gestion des fonctions du moteur, où il est prévu, pour un recyclage des gaz d'échappement (R), une admission (12) débouchant dans le module d'admission (3) en amont d'un mélangeur (M), dans la direction de l'air aspiré (2) entrant,
**caractérisé en ce que** le recyclage des gaz d'échappement (R) comprend deux refroidisseurs de gaz d'échappement (10, 11) servant au refroidissement des gaz d'échappement recyclés (8), et il est prévu un refroidissement des gaz d'échappement, en plusieurs étapes, avec un premier et un deuxième échangeur de chaleur (W) configurés à chaque fois comme un refroidisseur de gaz d'échappement (10, 11), et le deuxième refroidisseur de gaz d'échappement (11) est disposé dans le module d'admission (3).

2. Dispositif selon la revendication 1, **caractérisé en ce qu'**il est prévu en outre au moins un moyen (ST) qui supprime des hétérogénéités de grandeurs physiques.

3. Dispositif selon la revendication 1 ou 2, **caractérisé en ce que** le mélangeur (M) est configuré comme un mélangeur statique (7).

4. Dispositif selon l'une quelconque des revendications 1 à 3, **caractérisé en ce que** le moyen supplémentaire (ST) est configuré comme une vanne de régulation (13) servant à l'alimentation adaptée de gaz d'échappement recyclés (8).

5. Dispositif selon l'une quelconque des revendications 1 à 4, **caractérisé en ce que** le moyen supplémentaire (ST) est configuré comme une vanne de dérivation (18) servant à la régulation de la température d'alimentation des gaz d'échappement.

6. Dispositif selon l'une quelconque des revendications 1 à 5, **caractérisé en ce que** le moyen supplémentaire (ST) est une soupape de commande (20) servant à la régulation de la température du mélange gazeux (G) aspiré, dans une conduite (22) raccordée à un échangeur de chaleur (W).

7. Dispositif selon l'une quelconque des revendications précédentes, **caractérisé en ce que** le moyen supplémentaire (ST) est utilisable comme silencieux.

8. Dispositif selon l'une quelconque des revendications 1 à 7, **caractérisé en ce qu'**un refroidisseur d'air de suralimentation (6) est prévu pour le refroidissement d'air aspiré (2).

9. Dispositif selon la revendication 8, **caractérisé par** une vanne de dérivation (14) qui est disposée en amont ou en aval du refroidisseur d'air de suralimentation (6), dans la direction de l'air aspiré (2) entrant.

10. Dispositif selon la revendication 9, **caractérisé en ce que** la vanne de dérivation (14) est prévue, dans une première position de fin de course, pour le guidage pratiquement de la totalité de l'air aspiré (2) par le refroidisseur d'air de suralimentation (6) et, dans une deuxième position de fin de course, pour le guidage de l'air aspiré (2) passant devant le refroidisseur d'air de suralimentation (6), en particulier avec des positions intermédiaires réglables de façon quelconque.

11. Dispositif selon l'une quelconque des revendications 1 à 10, **caractérisé en ce qu'**un papillon des gaz (5) est disposé dans le module d'admission (3), côté admission.

12. Dispositif selon la revendication 11, **caractérisé en ce qu'**un compteur de débit massique (15) est disposé comme moyen de mesure (MM), en amont ou en aval du papillon des gaz (5).

13. Dispositif selon la revendication 11 ou 12, **caractérisé en ce qu'**un capteur de température (16) est disposé comme moyen de mesure (MM), en amont ou en aval du papillon des gaz (5).

14. Dispositif selon l'une quelconque des revendications 1 à 13, **caractérisé par** un autre échangeur de chaleur (W) et / ou en particulier par un dispositif de chauffage électrique servant au chauffage temporaire de l'air aspiré (2).

15. Dispositif selon l'une quelconque des revendications 1 à 14, **caractérisé par** un module d'admission intégré (3).

16. Dispositif selon l'une quelconque des revendications 1 à 15, **caractérisé en ce que** le moyen supplémentaire (ST) est configuré comme une vanne, en particulier comme une vanne de dérivation servant à l'alimentation de gaz d'échappement recyclés (8) en au moins deux flux gazeux variables (8.1, 8.2) dans la zone d'un module d'admission (3).

17. Dispositif selon la revendication 16, **caractérisé en ce que** le moyen supplémentaire (ST) fournit un premier flux gazeux (8.1) à un flux d'air de suralimentation (2) en amont d'un premier dispositif mélangeur (26), et le premier dispositif mélangeur (26) est prévu pour le mélange du premier flux gazeux (8.1) avec un flux d'air de suralimentation (2) avant l'alimentation, dans un refroidisseur d'air de suralimentation (6), d'un premier flux de gaz mixte (MG1) en résultant.

18. Dispositif selon la revendication 17, **caractérisé en ce que** le moyen supplémentaire (ST) fait passer un deuxième flux gazeux (8.2) devant le premier dispositif mélangeur (26) et le refroidisseur d'air de suralimentation (6) dans une dérivation (28), et un deuxième dispositif mélangeur (30) est prévu pour le mélange du deuxième flux gazeux (8.2) avec le premier flux de gaz mixte (MG1), où un deuxième flux de gaz mixte (MG2) en résultant peut être fourni aux tubulures d'admission (S).

19. Dispositif selon la revendication 18, **caractérisé en ce que** le moyen supplémentaire (ST) présente un autre élément de vanne (32) qui fait passer le premier flux gazeux (8.1), associé au flux d'air de suralimentation (2), devant le premier dispositif mélangeur (26) et le refroidisseur d'air de suralimentation (6) dans une autre dérivation (34), et le fournit au deuxième dispositif mélangeur (30), où le deuxième dispositif mélangeur (30) est prévu pour le mélange du premier flux gazeux (8.1), du flux d'air de suralimentation (2) et du deuxième flux gazeux (8.2), où un troisième flux de gaz mixte (MG3) en résultant peut être fourni aux tubulures d'admission (S).

20. Dispositif selon l'une quelconque des revendications 1 à 19, **caractérisé en ce qu'**un dispositif d'injection (38) servant à l'alimentation supplémentaire d'eau (H) dans le flux d'air de suralimentation (2), dans la zone du module d'admission (3), est intégré.

21. Dispositif selon la revendication 20, **caractérisé en ce que** de l'eau de condensation, utilisée comme eau (H), peut être fournie à un système de climatisation.

22. Utilisation d'un dispositif selon l'une quelconque des revendications 1 à 21, où le dispositif est doté d'un équipement servant à l'injection d'additifs.
